# FASCICULE DE BREVET EUROPEEN

(11) **EP 3 085 133 B1**
(45) Date de publication et mention de la délivrance du brevet: **23.06.2021**
(21) Numéro de dépôt: 14828216.3
(22) Date de dépôt: 16.12.2014
(51) Int. Cl.: H04W 12/06, H04W 12/40, H04W 12/47, H04W 4/14, H04L 29/06, H04L 9/32, H04W 4/80, H04W 12/0431, G07B 15/00

(54) **SYSTÈME ET PROCÉDÉ POUR FOURNIR UN SERVICE A L'UTILISATEUR D'UN TERMINAL MOBILE**
SYSTEM UND VERFAHREN ZUR BEREITSTELLUNG EINES DIENSTES FÜR DEN BENUTZER EINER MOBILEN ENDVORRICHTUNG
SYSTEM AND METHOD FOR PROVIDING A SERVICE TO THE USER OF A MOBILE TERMINAL

(30) Priorité: 19.12.2013 FR 1363035
(43) Date de publication de la demande: 26.10.2016
(73) Titulaire: ORANGE, 75015 Paris (FR)
(72) Inventeur: GRIMAULT, Jean-Luc, F-14120 Mondeville (FR); GRUPELI, Franck, F-14000 Caen (FR)
(86) Numéro de dépôt international: PCT/FR2014/053364
(87) Numéro de publication internationale: WO 2015/092261

(56) Documents cités:
- DE-A1-102010 017 861
- US-A1- 2003 093 695
- US-A1- 2011 068 165
- Rawad Kilani ET AL: "MOBILE AUTHENTICATION WITH NFC ENABLED SMARTPHONES", , 1 janvier 2012 (2012-01-01), XP055133692, Extrait de l'Internet: URL:http://eng.au.dk/fileadmin/DJF/ENG/PDF -filer/Tekniske_rapporter/samlet-ECE-TC-14 .pdf [extrait le 2014-08-07]
- None

## Description

### Arrière plan de l'invention

L'invention se rapporte au domaine général de la dématérialisation des titres de propriété autrement connus sous le nom de «tickets électroniques » et plus particulièrement au domaine d'application dans lequel les tickets électroniques sont destinés à être mémorisés dans un terminal mobile apte à restituer ledit ticket pour permettre à son utilisateur d'accéder à un bien ou plus généralement à un service.

Elle trouve une application privilégiée mais non limitative dans les applications dans lesquelles le terminal mobile restitue le ticket électronique en utilisant une technique de communication par champ proche.

Les techniques de communication "en champ proche" se développent en effet largement, la plus utilisée aujourd'hui pour la téléphonie mobile étant la technique connue sous l'acronyme NFC (en anglais « Near Field Communication »).

On connait notamment des services de transport dans lesquels les usagers des transports publics utilisent une application dédiée de leur terminal mobile pour acheter des tickets électroniques et pour valider leur ticket à l'entrée du bus ou du tramway en approchant leur terminal mobile à proximité d'un dispositif de contrôle d'accès apte à communiquer avec le terminal mobile ou plutôt avec un élément de sécurité du terminal mobile comme la carte SIM, par des moyens de communication en champ proche NFC pour obtenir le ticket électronique afin d'en vérifier sa validité. Plusieurs exemples d'authentification de terminal mobile par des tickets électroniques sont connus de US 2011/068165, US 2003/093695, XP055133692, et DE 10 2010 017861.

On connait également un service expérimental de dématérialisation des billets d'accès aux stades; les billets étaient stockés dans la carte SIM sécurisée du terminal mobile.

On connait également, dans le monde bancaire, des services de paiement dans lesquels certaines banques ont déployé chez des commerçants, des terminaux de paiement électroniques (TPE) sans contact utilisables aussi bien avec une carte bancaire qu'avec un mobile NFC doté d'un élément de sécurité comme la carte SIM.

Le document « mCoupons : An application for Near Field Communication (NFC) » de Sandra Dominikus et Manfred Aigner, publié sous le numéro 0-7965-2847-3/07 à la 21st International Conférence de l'AINAW'07 de2007 » décrit un système dans lequel l'utilisateur obtient un coupon électronique auprès d'une première entité « issuer » et valorise son coupon électronique auprès d'une deuxième entité « Cashier », le terminal mobile communiquant avec ces deux entités par des moyens de communication en champ proche de type NFC. Ce document décrit une méthode de sécurisation de ce système dans lequel l'entité « Cashier » authentifie le terminal mobile en demandant à ce dernier de signer un défi avec sa clef privée et en vérifiant le défi signé avec une clef publique du terminal mobile obtenue auprès d'un serveur de clefs PKI.

Ce système présente un inconvénient en ce que l'entité « Cashier » auprès de laquelle l'utilisateur valorise son coupon électronique doit pouvoir accéder au serveur de clefs PKI pour obtenir la clef publique du terminal mobile. Un tel système ne peut par conséquent pas être étendu pour contrôler l'accès à des services dans des lieux non connectés à un réseau.

L'invention propose un système de contrôle d'accès à un service par l'utilisateur d'un terminal mobile par validation d'un ticket électronique qui ne présente pas un tel inconvénient.

### Objet et résumé de l'invention

Ainsi, et selon un premier aspect, l'invention concerne un procédé de génération d'un ticket électronique utilisable depuis un terminal mobile pour accéder à un service, ce procédé comportant :
- une étape d'obtention de la clé publique du terminal mobile, complémentaire d'une clef privée du terminal mobile mémorisée dans un élément sécurisé du terminal mobile ; et
- une étape de génération d'un ticket électronique, ce ticket comportant des champs comprenant au moins :
   - des données d'identification du service ; et
   - la clef publique du terminal mobile.

Corrélativement, l'invention concerne une entité de génération d'un ticket électronique, ce ticket étant utilisable depuis un terminal mobile pour accéder à un service, cette entité comportant :
- un module d'obtention de la clé publique du terminal mobile, complémentaire d'une clef privée du terminal mobile mémorisée dans un élément sécurisé du terminal mobile ; et
- un module de génération d'un ticket électronique, ce ticket comportant des champs comprenant au moins :
   - des données d'identification du service ; et
   - la clef publique du terminal mobile.

Selon un deuxième aspect, l'invention vise un procédé selon la revendication 1 Z d'authentification d'un terminal mobile porteur d'un ticket électronique, ce procédé comportant :
- une étape de réception du ticket en provenance du terminal mobile par des moyens de communication courte distance ;
- une étape d'extraction d'une clef publique du terminal mobile comprise dans le ticket ;
- une étape de génération d'un aléa ;
- une étape de communication courte distance avec un élément sécurisé du terminal mobile, pour demander à cet élément sécurisé de signer l'aléa avec une clef privée du terminal mobile mémorisée dans cet élément sécurisé ; et
- une étape d'authentification du terminal mobile à partir de l'aléa signé et de la clef publique.

Corrélativement, l'invention vise aussi un module d'authentification selon la revendicaton 2 d'un terminal mobile porteur d'un ticket électronique, ce module comportant :
- un module de réception courte distance du ticket en provenance du terminal mobile;
- un module d'extraction d'une clef publique du terminal mobile comprise dans le ticket ;
- un module de génération d'un aléa ;
- un module de communication courte distance avec un élément sécurisé du terminal mobile, pour demander à cet élément sécurisé de signer l'aléa avec une clef privée du terminal mobile mémorisée dans cet élément sécurisé ;
- un module pour authentifier le terminal mobile à partir de l'aléa signé et de la clef publique.

Ainsi, et d'une façon générale, l'invention propose d'insérer la clef publique du terminal mobile dans le ticket électronique lui-même de sorte que le module qui authentifie le terminal au moment de contrôler l'accès au service peut le faire de façon autonome, sans accéder à un réseau de communication.

Par conséquent, l'invention vise aussi un portique d'accès à un service comportant un module d'authentification de terminal mobile tel que mentionné précédemment.

Les cas d'usage visés par l'invention sont notamment les suivants: ticket d'entrée de spectacle, abonnement de transport, réservation de vélos, ... tous cas d'usage dans lequel il faut prouver être en possession d'un droit d'accès à un service, éventuellement avec une validité limitée à une date précise ou durant une durée définie.

L'invention vise aussi un procédé selon la revendication 3 pour fournir un service à l'utilisateur d'un terminal mobile, ce procédé comportant :
- un procédé de génération d'un ticket électronique telle que mentionné précédemment, ce ticket étant utilisable depuis le terminal mobile pour accéder à un service ;
- une étape de livraison de ticket apte à délivrer, directement ou via un dispositif tiers, le ticket à une application du terminal mobile s'exécutant hors de l'élément sécurisé ;
- une procédé d'authentification du terminal mobile tel que mentionné précédemment; et
- une étape de contrôle d'accès au service apte à valider les données d'identification du service et à fournir le service uniquement si les données d'identification du service et l'authenticité du terminal mobile ont été vérifiées.

Corrélativement, l'invention vise également un système pour fournir un service à l'utilisateur d'un terminal mobile, ce système comportant :
- une entité de génération d'un ticket électronique telle que mentionnée précédemment, ce ticket étant utilisable depuis un terminal mobile pour accéder à un service ;
- un module de livraison de ticket apte à délivrer, directement ou via un dispositif tiers, ledit ticket à une application du terminal mobile s'exécutant hors de l'élément sécurisé ;
- un module d'authentification du terminal mobile tel que mentionné précédemment; et
- un module de contrôle d'accès au service apte à valider les données d'identification du service et à fournir le service uniquement si les données d'identification du service et l'authenticité du terminal mobile ont été vérifiées.

Il est fondamental de constater que dans l'invention, le ticket électronique est géré au sein du terminal mobile par une application qui s'exécute hors de l'élément sécurisé. En particulier, le ticket électronique est stocké dans une mémoire du terminal mobile hors de l'élément sécurisé.

L'invention se distingue ainsi avantageusement de toutes les techniques mises en place aujourd'hui qui nécessitent l'installation d'une application spécifique au service dans l'élément sécurisé du terminal mobile (carte SIM par exemple).

En particulier, l'invention se distingue des applications connues permettant l'accès à un spectacle, dans lesquelles, un ticket virtuel est associé à une application sécuritaire spécifique, tous deux stockés dans la carte SIM.

Même si ce stockage de ticket dématérialisé dans la carte SIM est très pertinent et fait actuellement ses preuves, la solution technique présente encore quelques inconvénients dont l'invention s'affranchit.

En effet, le stockage d'applications dans la carte SIM demande des infrastructures complexes (dites OTA "over the air" qui sont conformes aux techniques éditées par l'association GlobalPlatform). Il est plus complexe d'installer une application dans une carte SIM que dans un terminal et cela entraîne des délais d'installation plus importants. Ces infrastructures OTA sont souvent uniquement maitrisées par les fabricants de cartes SIM ce qui entraîne également des coûts complémentaires.

De plus, une application sécuritaire spécifique à un service s'exécutant dans la carte SIM réclame que la carte dispose de suffisamment de mémoire; ce qui n'est pas toujours le cas.

Enfin, une application sécuritaire dans la carte SIM ne suffit souvent pas à couvrir le cas d'usage et il faut lui associer une application sur le mobile. On peut citer la nécessité pour le client de consulter le ticket stocké avec une application graphique attrayante adaptée au service. Cet ensemble constitué de l'application spécifique sur mobile interagissant avec l'application sécuritaire spécifique sur la carte SIM constitue un ensemble technique complexe à mettre au point et à tester.

Dans le contexte de l'invention, l'élément sécurisé du terminal mobile (carte SIM par exemple) est utilisée uniquement comme moyen d'authentification forte, à savoir pour fournir la preuve que terminal mobile approché du portique comporte le bon élément sécurisé.

Mais l'invention évite d'avoir besoin de charger une application spécifique au service dans l'élément sécurisé de sorte que le rôle de l'élément sécurisé, qui se limite à l'authentification, reste identique quelque-soit le service (abonnement transport, accès au stade de football, ...).

Conformément à l"invention, les tickets électroniques sont chargés dans le terminal mobile lui-même par des techniques souples et simples connues de l'homme du métier (par SMS, par MMS ou par téléchargement http, ...) sans qu'il soit besoin de recourir aux techniques beaucoup plus complexes utilisées pour charger des applications dans une carte SIM via des plateformes OTA coûteuses.

L'utilisateur de l'invention peut en outre installer lui-même l'application sur son terminal mobile. Une telle application peut être adaptée à chaque type de service ou même à chaque service (graphisme et menus adaptés y compris adaptation au mobile) car il n'y a aura pas d'interaction complexe entre cette application et l'application générique d'authentification exécutée par l'élément sécurisé.

Dans un mode particulier de réalisation du système selon l'invention, le module d'authentification du terminal mobile ou le portique qui l'incorpore communique avec le terminal par des moyens de communication à champ proche.

On notera que lorsque l'on parle de "proche du portique", on entend par là que le portique puisse être sûr que l'élément sécurisé qu'il est en train d'authentifier est bien proche du portique. Cette certitude nécessite un procédé de "communication en champ proche" tel que les protocoles NFC. L'invention peut faire usage des protocoles NFC ou d'autres techniques de communication en champ proche actuelles ou futures.

L'important est d'éviter qu'un système fraudeur puisse faire croire au portique qu'il est en train d'authentifier l'élément sécurisé proche, alors qu'en fait, il est en train d'authentifier une carte distante de plusieurs Kms, à travers un lien relais frauduleux mis en place dans l'équipement mobile par un pirate. Dans le cas d'un abonnement de transport, ce type de fraude permettrait à ce que plusieurs usagers utilisent à distance la même carte SIM transformée alors en "serveur d'authentification" pour plusieurs usagers frauduleux utilisant le même abonnement sur différents mobiles. C'est la raison pour laquelle, dans l'invention, on utilise une communication en champ proche entre le portique et l'élément sécurisé.

Dans un mode particulier de réalisation, le procédé comporte une étape de signature des champs du ticket par une clé privée d'une entité de génération de ticket, et une étape d'insertion de cette signature dans le ticket électronique.

Dans ce mode de réalisation, l'entité de génération de ticket comporte des moyens de signature desdits champs du ticket par une clé privée de cette entité, et des moyens d'insertion de cette signature dans le ticket électronique.

Dans ce mode particulier de réalisation, le système selon la revendication 4 de l'invention comporte:
- un module de vérification dudit ticket apte à vérifier l'intégrité du ticket électronique à partir de la signature comprise dans le ticket et d'une clef publique complémentaire de la clef privée utilisée par l'entité de génération de ticket pour calculer ladite signature ;
- le module de contrôle d'accès au service étant apte à valider les données d'identification du service et à fournir le service uniquement si les données d'identification du service, l'intégrité du ticket électronique et l'authenticité du terminal mobile ont été vérifiées. L'invention permet ainsi de garantir que le ticket électronique n'a pas été corrompu.
- Dans un mode particulier de réalisation du système selon l'invention:
- les champs du ticket électronique représentatifs de l'offre comportent en outre un identifiant de clefs qui identifie de manière unique le couple constitué par la clef publique du terminal mobile et la clef privée du terminal mobile mémorisée dans l'élément sécurisé du terminal mobile ;
- le module d'authentification du terminal mobile étant apte à obtenir cet identifiant de clefs pour authentifier ledit terminal mobile.

Ce mode particulier de réalisation permet la mise en œuvre de l'invention avec différents fournisseurs de clefs (opérateur, fournisseur du service, fabricant de l'élément sécurisé, ...).
- Dans un mode particulier de réalisation du système selon l'invention:
- les champs du ticket électronique représentatifs de l'offre comportent en outre une référence de l'algorithme utilisé pour calculer la signature ;
- le module d'authentification du ticket étant apte à obtenir cette référence pour authentifier ledit terminal mobile.

Ce mode particulier de réalisation permet d'authentifier un ticket électronique signé avec différents types de signature.

Dans un mode particulier de réalisation de l'invention, les données d'identification du service comportent une durée de validité de l'offre de service.

Dans un mode particulier de réalisation de l'invention, les données d'identification du service comportent un identifiant du fournisseur de service.

Dans un mode particulier de réalisation, le système selon l'invention comporte une entité de confiance apte à fournir la clef publique du terminal mobile à l'entité de génération de ticket.

Dans un mode particulier de réalisation du système selon l'invention, le module de livraison de ticket est apte à délivrer le ticket au terminal mobile par SMS, MMS, courrier électronique, ou téléchargement HTTP par le terminal mobile.

Dans un mode particulier de réalisation de l'invention, le ticket livré au terminal mobile n'est pas chiffré.

L'invention vise aussi un signal comportant un ticket électronique, ce ticket comportant des champs comprenant au moins :
- des données d'identification d'un service ; et
- la clef publique d'un terminal mobile.

Dans un mode particulier de réalisation, les différentes étapes du procédé de génération de ticket électronique et/ou du procédé d'authentification de terminal mobile sont déterminées par des instructions de programmes d'ordinateurs.

En conséquence, l'invention vise aussi :
- un programme d'ordinateur sur un support d'informations, ce programme étant susceptible d'être mis en œuvre par un ordinateur, ce programme comportant des instructions adaptées à la mise en œuvre du procédé de génération de ticket électronique tel que mentionné ci-dessus ; et
- un programme d'ordinateur sur un support d'informations, ce programme étant susceptible d'être mis en œuvre par un ordinateur, ce programme comportant des instructions adaptées à la mise en œuvre du procédé d'authentification de terminal mobile tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention apparaîtront à la lumière de la description qui suit, faite en référence aux dessins annexés dans lesquels :
- la figure 1 représente un terminal mobile pouvant être utilisé dans l'invention ;
- la figure 2 représente un ticket électronique TIC conforme à un mode particulier de réalisation de l'invention ;
- la figure 3 représente un exemple de système conforme à un mode particulier de réalisation de l'invention ;
- la figure 4 représente une entité de génération de ticket électronique conforme à un mode particulier de réalisation de l'invention ;
- la figure 5 représente un portique conforme à un mode particulier de réalisation de l'invention ;
- la figure 6 représente sous forme d'organigramme les principales étapes d'un procédé pour fournir un service à l'utilisateur d'un terminal mobile conforme à un mode de réalisation de l'invention ;
- la figure 7 représente sous forme d'organigramme les principales étapes d'un procédé de génération de ticket électronique conforme à un mode de réalisation de l'invention ; et
- la figure 8 représente sous forme d'organigramme les principales étapes d'un procédé d'authentification d'un terminal mobile conforme à un mode de réalisation de l'invention.

### Description détaillée d'un mode de réalisation

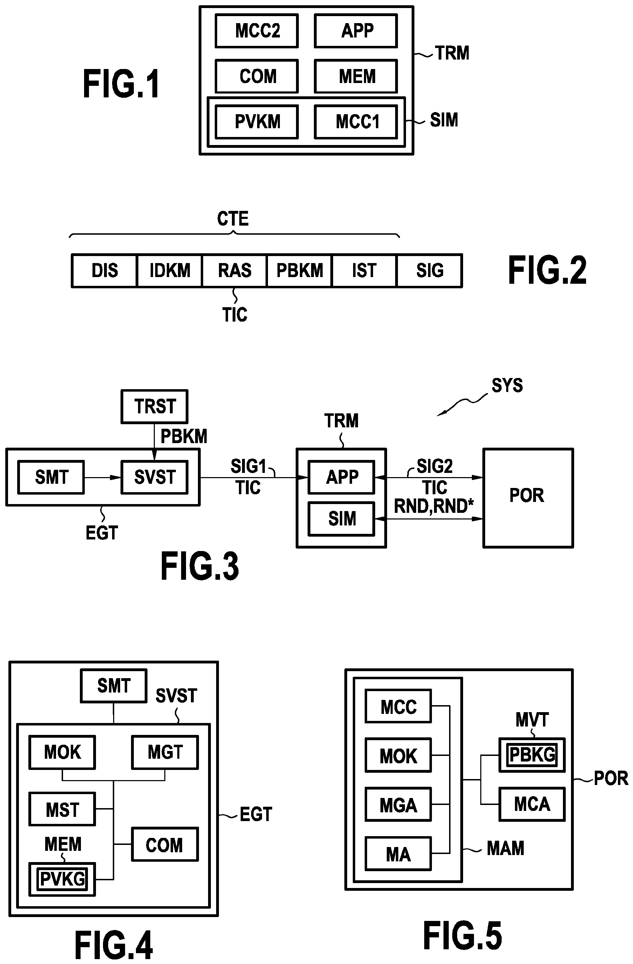

La figure 1 représente un terminal mobile TRM pouvant être utilisé dans l'invention. Ce terminal mobile TRM comporte un élément sécurisé, à savoir une carte SIM, comportant une clef privée PVKM. Conformément à l'invention, la carte SIM ne comporte pas d'algorithme ou de données propre audit service, elle n'est utilisée que pour authentifier le terminal TRM porteur du ticket.

La carte SIM comporte des moyens MCC1 de communication courte distance ou une interface vers un composant dans le mobile capable d'assurer des communications par champ proche de type NFC, par exemple composant CLF (Contactless frontend) NFC.

Le terminal mobile TRM comporte également des moyens MCC2 de communication courte distance, distincts des moyens MCC1 de la carte SIM.

Les moyens de communication courte distance MCC1, MCC2 sont par exemple des moyens de communication par champ proche de type NFC.

Le terminal mobile TRM comporte en outre des moyens de communication mobile COM aptes à recevoir un ticket électronique et à le mémoriser dans une mémoire MEM.

Le terminal mobile comporte une application APP. L'application APP et la mémoire MEM ne sont pas comprises dans l'élément sécurisé SIM.

La figure 2 représente un ticket électronique TIC conforme à un mode particulier de réalisation de l'invention.

Ce ticket électronique TIC comporte des champs CTE et une signature SIG de ces champs obtenue par un algorithme de chiffrement connu en soi de l'homme du métier.

Dans le mode de réalisation décrit ici, les champs CTE sont codés en TLV (Type Longueur Valeur) et les données peuvent donc être de longueurs différentes.

Conformément à l'invention, les champs CTE comportent un champ DIS comportant des données d'information sur le service (partie-métier du ticket) et la clef publique PBKM complémentaire de la clef privée PVKM mémorisée dans la carte SIM du terminal mobile TRM.

Le champ DIS indique le droit conféré par la possession du ticket, par exemple: un droit d'accès à un spectacle ou à un réseau de transport. Ce champ comporte par exemple l'identification du fournisseur de service, la référence du service et le numéro du ticket. Le champ DIS peut également comporter une information représentative de la période de validité du ticket électronique TIC.

Dans le mode de réalisation décrit ici, les champs CTE comportent en outre
- un identifiant de clefs IDKM qui identifie de manière unique le couple constitué par la clef publique PBKM du terminal mobile et la clef privée PVKM du terminal mobile ; et
- une référence RAS de l'algorithme utilisé pour calculer la signature SIG ; et
- un champ IST comportant un identifiant du signataire.

La figure 3 représente un exemple de système SYS conforme à l'invention.

Dans l'exemple de réalisation décrit ici, ce système SYS comporte une entité de confiance TRST ayant connaissance des couples {clef publique/ clef privée} des cartes SIM et apte à fournir la clef publique PBKM du terminal mobile TRM à une entité EGT de génération de ticket.

Dans le mode de réalisation décrit ici, l'entité de génération de ticket EGT comporte un « serveur-métier-tickets » SMT et un serveur de vente et de signature de tickets SVST.

Dans l'exemple décrit ici, le serveur-métier-tickets SMT émet des tickets relatifs au service rendu, mais sans en connaître le bénéficiaire (le client). Il insère donc dans le ticket essentiellement le champ DIS comportant les informations sur le service, par exemple, pour un spectacle, le nom du spectacle, date du spectacle et le numéro de siège.

Dans l'exemple de réalisation décrit ici, la signature et la vente du ticket sont réalisées par le serveur SVST. Ce serveur peut par exemple être administré par une chaîne de magasins culturels.

Le serveur procède à la vente des tickets. Il lie donc la partie métier du ticket à un client en remplissant les champs IDKM, RAS et PBKM déjà décrits pour produire le ticket complet. Puis le serveur SVST signe l'ensemble de ces données (suivant les modalités expliquées plus loin) et introduit la signature SIG dans le ticket comme décrit en référence à la figure 2.

En référence à la figure 4, le serveur SVST comporte :
- une mémoire MEM comportant la clé privée PVKG de l'entité de génération de ticket EGT ;
- un module MOK pour obtenir, de l'entité de confiance TRST, la clé publique PBKM du terminal mobile TRM ;
- un module MGT pour générer le ticket électronique TIC ;
- des moyens MST de signature des champs CTE du ticket électronique par la clef privée PVKG, le module MGT étant apte à insérer la signature SIG dans le ticket électronique.

Cette entité EGT est apte à délivrer un signal SIG1 conforme à l'invention, à l'application APP du terminal mobile TRM, ce signal étant porteur du ticket électronique TIC. Dans le mode de réalisation décrit ici, le terminal mobile reçoit le ticket via ses moyens de communication COM. En variante il pourrait utiliser les moyens de communication courte distance MCC2 du terminal mobile.

Le terminal mobile TRM est également apte à communiquer avec un portique POR contrôlant l'accès au service, par exemple un portique d'accès à un stade, à une salle de spectacle ou à un service de transport en commun (bus, métro, ...).

Plus précisément, l'application APP du terminal mobile communique avec le portique POR en utilisant les moyens de communication courte distance MCC2 pour lui délivrer un signal SIG2 conforme à l'invention porteur du ticket électronique TIC.

Comme décrit ultérieurement, le portique POR est également apte à établir une communication courte distance avec les moyens de communication courte distance MCC1 de la carte SIM pour authentifier le terminal mobile TRM.

Dans le mode de réalisation décrit ici, et en référence à la figure 5, le portique POR comporte :
- un module MAM conforme à l'invention chargé d'authentifier le terminal mobile TRM porteur du ticket électronique. Il utilise pour cela la clef publique PBKM du terminal mobile TRM comprise dans le ticket TIC et sollicite l'élément sécurisé SIM de ce terminal pour jouer un défi.
- un module MVT chargé de vérifier l'intégrité du ticket électronique à partir de la signature SIG comprise dans le ticket. Il dispose pour cela de la clé publique PBKG complémentaire de la clef privée PVKG utilisée par l'entité de génération de ticket EGT pour calculer la SIG.
- un module de contrôle d'accès au service MCA apte à valider les données d'identification dudit service DIS et à fournir le service uniquement si les données d'identification du service, l'intégrité du ticket électronique et l'authenticité du terminal mobile ont été vérifiées.

Conformément à l'invention, le module MAM d'authentification du terminal mobile TRM porteur d'un ticket électronique TIC comporte :
- un module MCC de réception courte distance dudit ticket TIC apte à communiquer avec les moyens de communication courte distance MCC2 du terminal mobile;
- un module MOK d'extraction de la clef publique PBKM comprise dans le ticket, cette clef étant, en l'absence de fraude, la clef publique du terminal mobile, complémentaire de la clef privée PVKM mémorisée dans l'élément sécurisé du terminal mobile ;
- un module MGA de génération d'un aléa RND ;
- un module MCC de communication courte distance apte à communiquer avec les moyens de communication courte distance MCC1 de l'élément sécurisé SIM du terminal mobile. Ce module de communication MCC permet au module MAM de demander à l'élément sécurisé SIM de signer l'aléa RND avec la clef privée PVKM du terminal mobile mémorisée dans l'élément sécurisé et de lui renvoyer l'aléa signé RND* ;
- un module MA pour authentifier ledit terminal mobile TRM à partir de l'aléa signé RND* et de la clef publique PBKM.

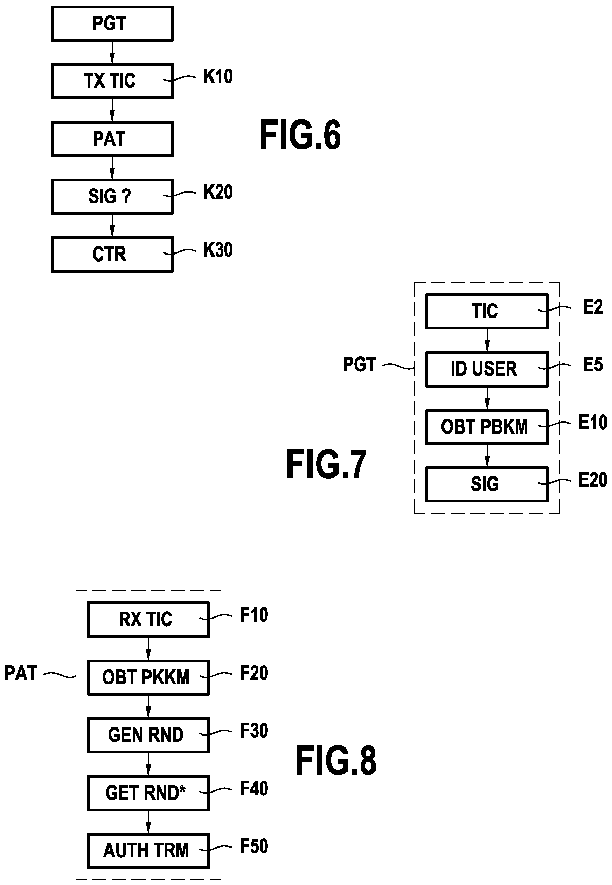

La cinématique de l'invention va maintenant être décrite en référence aux figures 6 à 8.

La figure 6 représente les principales étapes d'un procédé pour fournir un service à l'utilisateur du terminal mobile TRM conformément à un mode de réalisation de l'invention. Ce procédé comporte :
- un procédé PGT de génération d'un ticket électronique TIC conforme à l'invention et dont les principales étapes E2 à E20 sont décrites en référence à la figure 7 ;
- une étape K10 de livraison du ticket TIC, directement ou via un dispositif tiers, à l'application APP du terminal mobile s'exécutant hors de l'élément sécurisé SIM ;
- une procédé PAT d'authentification du terminal mobile TRM conforme à l'invention et dont les principales étapes F10 à F50 sont décrites en référence à la figure 8 ;
- une étape K20 de contrôle d'accès audit service et
- une étape K30 pendant laquelle le portique POR fournit l'accès au service uniquement si les données d'identification du service DIS, l'intégrité du ticket électronique TIC et l'authenticité du terminal mobile TRM ont été vérifiées.

Nous allons maintenant décrire, en référence à la figure 7, la génération du ticket électronique TIC.

Au cours d'une étape E2, le serveur métier ticket SMT créé un ticket électronique vide, y insère les données d'identification du service DIS et transfère le ticket au serveur SVST de vente et de signature de tickets.

On suppose qu'un utilisateur souhaite acheter un ticket électronique pour ce service et accède au serveur SVST en utilisant le navigateur Web de son ordinateur. Au cours d'une étape E5, le serveur SVST identifie le client, reçoit la commande du ticket via le PC du client et débite un compte du client. Cette identification peut être par exemple un login/ mot de passe saisi sur le site web de commande du ticket. Si l'utilisateur utilise un terminal mobile, l'identification peut être réalisée avec le numéro de téléphone MSISDN détecté par le réseau.

Au cours d'une étape E10, le serveur SVST obtient la clé publique PBKM du terminal mobile TRM en interrogeant le serveur de confiance TRST, l'insère dans le ticket TIC et complète les autres champs CET, à savoir la référence de la bi-clef IDKM, la référence de l'algorithme de signature RAS, la clef publique du terminal PBKM et l'identifiant du signataire IST décrits en référence à la figure 2. Puis, au cours de l'étape E20, le serveur SVST de vente et de signature de tickets signe ces champs CET en utilisant la clé privée PVKG de l'entité de génération de ticket EGT et insère la signature SIG dans le ticket pour terminer la génération de ce ticket.

De retour à la figure 6, l'entité de génération de ticket EGT envoie le ticket signé au terminal mobile TRM au cours d'une étape K10, par exemple par SMS, par MMS ou dans la session HTTP si la livraison est exécutée sur le même terminal que celui utilisé pour passer commande.

Le ticket électronique TIC est stocké non chiffré dans une mémoire MEM du mobile, hors de l'élément sécurisé SIM.

Nous supposerons que l'utilisateur souhaite utiliser le ticket électronique TIC pour accéder au service.

A cet effet, l'utilisateur approche son terminal du portique POR.

Le portique POR met alors en œuvre un procédé d'authentification du terminal mobile TRM qui va maintenant être décrit en référence à la figure 8.

Au cours d'une étape F10, le module d'authentification de terminal MAM du portique POR reçoit le ticket TIC en provenance du terminal mobile par ses moyens MCC de communication courte distance. On peut notamment utiliser des moyens de communication NFC, Bluetooth basse énergie, ou infra-rouge. Dans ce présent mode de réalisation, on utilise la même technique NFC que celle utilisée ultérieurement entre le portique et la carte SIM (voir étape F40). De façon connue, le client approche son terminal mobile TRM du portique POR. Le terminal mobile TRM doit rester proche du portique tant que le portique n'a pas reçu l'aléa signé (étape F40) lors du défi joué avec l'élément sécurisé SIM. L'utilisateur peut être invité à maintenir le terminal mobile TRM proche du portique POR tant qu'il n'a pas entendu un bip ou reçu un avertissement lui indiquant que son mobile peut être retiré du portique ou tant que le portique n'a pas autorisé l'accès au service.

Dans le mode de réalisation décrit ici, le portique tient le rôle de lecteur NFC. L'application APP du mobile peut être générique pour plusieurs services ou être spécifique à un service avec un graphisme attractif et propre au service. Conformément à l'invention, cette application ne s'exécute pas sur l'élément sécurisé SIM ce qui offre plus de souplesse.

Un échange NFC entre le portique POR et l'application APP sur le terminal mobile s'établit. S'il s'agit d'une application NFC spécifique au service qui est sélectionnée par le portique POR, le mode d'identification des tickets accessibles à l'application et la sélection du bon ticket est propriétaire. S'il s'agit d'une application APP générique, commune à plusieurs services, le ticket peut être sélectionné grâce un sous-champ "identification du fournisseur de service" dans le champ d'informations DIS du ticket.

Au cours d'une étape F20, le module d'authentification de terminal MAM extrait la clef publique PBKM comprise dans le ticket TIC;

Au cours d'une étape F30, le module d'authentification de terminal MAM génère un aléa RND. Jusqu'à ce stade, l'élément sécurisé SIM du terminal mobile n'est pas sollicité.

Le module d'authentification MAM du portique POR relâche sa communication NFC avec le terminal mobile lui-même et établit, au cours d'une étape F40, une communication directe NFC avec l'élément sécurisé SIM, pour demander à cet élément sécurisé SIM de signer l'aléa RND avec la clef privée PVKM du terminal mobile mémorisée dans cet élément sécurisé.

Plus précisément, dans le mode de réalisation décrit ici, le portique POR envoi l'aléa RND à une application générique NFC, située dans l'élément sécurisé SIM et qui est utilisée pour tous les services.

Lorsqu'il peut y avoir plusieurs clés dans l'élément sécurisé SIM (par exemple: clé de l'opérateur mobile, clé d'un groupement de fournisseurs, plusieurs clefs de vendeurs-tickets), le portique POR envoie la référence du couple {clef publique/clef privée} contenue dans le champ IDKM à l'élément sécurisé SIM pour qu'il sélectionne la bonne clé privée PVKM à utiliser pour signer l'aléa.

Lorsque l'élément sécurisé dispose de plusieurs algorithmes d'authentification (2 ou 3 typiquement), l'aléa RND est aussi accompagné de la référence d'algorithme d'authentification obtenu dans le champ RAS.

Au cours d'une étape F50, le module d'authentification de terminal MAM authentifie le terminal mobile TRM à partir de l'aléa signé RND* et de la clef publique PBKM lue dans le ticket TIC à l'étape F20.

Au cours d'une étape K20 le module de vérification de l'intégrité du ticket MVT vérifie l'intégrité dudit ticket électronique à partir de la signature SIG comprise dans le ticket et d'une clef publique PBKG complémentaire de la clef privée PVKG utilisée par l'entité de génération de ticket EGT pour calculer cette signature.

Au cours d'une étape K30, le module de contrôle d'accès MCA vérifie les données d'information de service DIS. Il vérifie par exemple si le nom du spectacle est correct, si la date est correcte, le numéro de siège, le numéro de ticket, .... Le module de contrôle d'accès MCA doit pour ce faire disposer du même type de données que le serveur métier SMT. Au cours de cette même étape, le module de contrôle d'accès audit service MCA du portique POR fournit l'accès au service uniquement si les données d'identification du service DIS, l'intégrité du ticket électronique TIC et l'authenticité du terminal mobile TRM ont été vérifiées.

Conformément à l'invention, l'étape d'authentification du terminal F50 et l'étape K20 de vérification de l'intégrité du ticket TIC peut être faite en local, dans le portique POR, et il n'est pas nécessaire que ce portique soit connecté à Internet ou à un Intranet.

Le portique peut être connecté par un réseau local à un ou deux serveurs situés à quelques mètres et qui traitent les requêtes de tous les portiques d'accès au service.

Dans le mode de réalisation décrit précédemment, les fournisseurs de service utilisent, pour authentifier le terminal mobile TRM, la clé privée PVKM installée par l'opérateur mobile dans la carte SIM du terminal. Les couples clé publique/ clé privée des cartes SIM sont gérées par l'opérateur mobile.

En variante, l'entité de confiance TRST peut être gérée par un groupement de fournisseurs de services qui installe ou fait installer une clé privée dans chaque carte SIM de ses clients et gère les couples clé publique/ clé privée des cartes.
- L'entité de confiance TRST peut aussi être administrée par l'administrateur du serveur SVST de vente et de signature de tickets, qui installe ou fait installer une clé privée dans chaque carte SIM de ses clients et gère les couples clé publique/ clé privée des cartes. Dans ce cas, les couples clé publique/ clé privée ne sont usités que pour les tickets générés par le vendeur de tickets. Dans ce mode de réalisation, l'entité de confiance TRST peut être hébergée dans le serveur SVST de vente et de signature des tickets.

Dans le mode de réalisation décrit précédemment, le module MAM d'authentification du terminal mobile TRM, le module MVT de vérification de l'intégrité du ticket électronique et le module MCA de contrôle d'accès au service sont incorporés dans le portique POR.

En variante, au moins un de ces modules MAM (hors MCC restant forcément dans le portique), MVT ou MCA est mis en œuvre par un serveur externe à ce portique.

Dans le mode de réalisation décrit précédemment, l'utilisateur achetait le service en utilisant le navigateur Web de son ordinateur à savoir un terminal différent du terminal mobile TRM utilisé pour accéder au service. En variante, le ticket peut être acheté avec terminal mobile TRM utilisé pour passer le portique POR.

## Revendications

1. Procédé d'authentification d'un terminal mobile porteur d'un ticket électronique (TIC), ledit procédé comportant :
- une étape (F10) de réception dudit ticket (TIC) en provenance du terminal mobile par des moyens (MCC) de communication courte distance ;
- une étape (F20) d'extraction d'une clef publique (PBKM) du terminal mobile comprise dans ledit ticket ;
- une étape (F30) de génération d'un aléa (RND) ;
- une étape (F40) de communication courte distance avec un élément sécurisé (SIM) du terminal mobile (TRM), pour demander à cet élément sécurisé (SIM) de signer ledit aléa avec une clef privée (PVKM) du terminal mobile mémorisée dans cet élément sécurisé ;
- une étape (F50) d'authentification dudit terminal mobile (TRM) à partir dudit aléa signé (RND*) et de ladite clef publique (PBKM).

2. Module (MAM) d'authentification d'un terminal mobile porteur d'un ticket électronique (TIC), ledit module comportant :
- un module (MCC) de réception courte distance dudit ticket (TIC) en provenance du terminal mobile;
- un module (MOK) d'extraction d'une clef publique (PBKM) du terminal mobile comprise dans ledit ticket ;
- un module (MGA) de génération d'un aléa (RND) ;
- un module (MCC) de communication courte distance avec un élément sécurisé (SIM) du terminal mobile (TRM), pour demander à cet élément sécurisé (SIM) de signer ledit aléa avec une clef privée (PVKM) du terminal mobile mémorisée dans cet élément sécurisé ;
- un module (MA) pour authentifier ledit terminal mobile (TRM) à partir dudit aléa signé (RND*) et de ladite clef publique (PBKM).

3. Procédé pour fournir un service à un utilisateur d'un terminal mobile (TRM), le procédé comportant :
- Une étape de génération d'un ticket électronique (TIC), ledit ticket étant utilisable depuis ledit terminal mobile pour accéder au service, comprenant :
∘ une étape (E10) d'obtention de la clé publique (PBKM) du terminal mobile, complémentaire d'une clef privée (PVKM) du terminal mobile mémorisée dans un élément sécurisé (SIM) du terminal mobile ;
∘ une étape (E20) de génération d'un ticket électronique (TIC), ledit ticket comportant des champs (CTE) comprenant au moins :
▪ des données d'identification dudit service (DIS) ; et
▪ ladite clef publique du terminal mobile (PBKM).
- une étape (K10) de livraison de ticket apte à délivrer, directement ou via un dispositif tiers, ledit ticket (TIC) à une application (APP) du terminal mobile s'exécutant hors de l'élément sécurisé (SIM) ;
- une étape d'authentification comprenant :
∘ une étape (F10) de réception dudit ticket (TIC) en provenance du terminal mobile par des moyens (MCC) de communication courte distance ;
∘ une étape (F20) d'extraction d'une clef publique (PBKM) du terminal mobile comprise dans ledit ticket ;
∘ une étape (F30) de génération d'un aléa (RND) ;
∘ une étape (F40) de communication courte distance avec un élément sécurisé (SIM) du terminal mobile (TRM), pour demander à cet élément sécurisé (SIM) de signer ledit aléa avec une clef privée (PVKM) du terminal mobile mémorisée dans cet élément sécurisé ;
∘ une étape (F50) d'authentification dudit terminal mobile (TRM) à partir dudit aléa signé (RND*) et de ladite clef publique (PBKM).
- une étape (K30) de contrôle d'accès audit service apte à valider les données d'identification dudit service et à fournir ledit service uniquement si les données d'identification du service et l'authenticité du terminal mobile ont été vérifiées.

4. Système (SYS) pour fournir un service à l'utilisateur d'un terminal mobile, ce système comportant :
- une entité (EGT) de génération d'un ticket électronique (TIC) comportant :
- un module (MOK) d'obtention de la clé publique (PBKM) du terminal mobile, complémentaire d'une clef privée (PVKM) du terminal mobile mémorisée dans un élément sécurisé (SIM) du terminal mobile ;
- un module (MGT) de génération d'un ticket électronique, ledit ticket comportant des champs (CTE) comprenant au moins :
∘ des données d'identification dudit service (DIS) ; et
∘ ladite clef publique du terminal mobile (PBKM),
ledit ticket étant utilisable depuis le terminal mobile pour accéder au service ;
- un module de livraison de ticket (COM) apte à délivrer, directement ou via un dispositif tiers, ledit ticket (TIC) à une application (APP) du terminal mobile s'exécutant hors de l'élément sécurisé (SIM) ;
- un module d'authentification du terminal mobile (MAM) selon la revendication 2; et
- un module de contrôle d'accès audit service (MCA) apte à valider les données d'identification dudit service et à fournir ledit service uniquement si les données d'identification du service et l'authenticité du terminal mobile ont été vérifiées.

5. Système selon la revendication 4 **caractérisé en ce qu'**il comporte:
- un module de vérification dudit ticket (MVT) apte à vérifier l'intégrité dudit ticket électronique à partir de ladite signature comprise dans le ticket et d'une clef publique (PBKG) complémentaire de la clef privée (PVKG) utilisée par ladite entité de génération de ticket pour calculer ladite signature ;
- ledit module de contrôle d'accès audit service (MCA) étant apte à valider les données d'identification dudit service et à fournir ledit service uniquement si les données d'identification du service, l'intégrité du ticket électronique et l'authenticité du terminal mobile ont été vérifiées.

6. Système selon la revendication 4 ou 5, **caractérisé en ce que** :
- les champs du ticket électronique représentatifs de l'offre comportent en outre un identifiant de clefs (IDKM) qui identifie de manière unique le couple constitué par la clef publique (PBKM) du terminal mobile et la clef privée (PVKM) du terminal mobile mémorisée dans l'élément sécurisé (SIM) du terminal mobile ;
- ledit module d'authentification du terminal mobile (MAM) étant apte à obtenir ledit identifiant de clefs (IDKM) pour authentifier ledit terminal mobile.

7. Système selon l'une quelconque des revendications 4 à 6, **caractérisé en ce que** :
- les champs du ticket électronique représentatifs de l'offre comportent en outre une référence (RAS) de l'algorithme utilisé pour calculer ladite signature ;
- ledit module d'authentification dudit ticket (MVT) étant apte à obtenir ladite référence (RAS) pour authentifier ledit terminal mobile.

8. Système selon l'une quelconque des revendications 4 à 7, **caractérisé en ce que** les données d'identification dudit service (DIS) comportent une durée de validité de l'offre de service.

9. Système selon l'une quelconque des revendications 4 à 8, **caractérisé en ce que** les données d'identification dudit service (DIS) comportent un identifiant du fournisseur de service.

10. Système selon l'une quelconque des revendications 4 à 9, **caractérisé en ce qu'**il comporte une entité de confiance (TRST) apte à fournir la clef publique (PBKM) du terminal mobile à ladite entité (EGT) de génération de ticket.

11. Système selon l'une quelconque des revendications 4 à 10, **caractérisé en ce que** ledit module de livraison de ticket (COM) est apte à délivrer ledit ticket (TIC) au terminal mobile (TRM) par SMS, MMS, courrier électronique, ou téléchargement HTTP par le terminal mobile.

12. Système selon l'une quelconque des revendications 4 à 11, **caractérisé en ce que** le ticket (TIC) livré au terminal mobile n'est pas chiffré.

13. Système selon l'une quelconque des revendications 4 à 12, **caractérisé en ce que** le module d'authentification du terminal mobile (MAM) communique avec ledit élément sécurisé du terminal par des moyens de communication à champ proche.

14. Portique d'accès pouvant être utilisé dans un système selon l'une quelconque des revendications 4 à 13, **caractérisé en ce qu'**il comporte un module d'authentification de terminal mobile conforme à la revendication 2.

## Patentansprüche

1. Verfahren zur Authentifizierung eines mobilen Endgeräts, das ein elektronisches Ticket (TIC) enthält, wobei das Verfahren beinhaltet:
- einen Schritt (F10) des Empfangens des Tickets (TIC) von dem mobilen Endgerät über Nahfeldkommunikationseinrichtungen (MCC);
- einen Schritt (F20) des Extrahierens eines öffentlichen Schlüssels (PBKM) des mobilen Endgeräts, der in dem Ticket enthalten ist;
- einen Schritt (F30) des Erzeugens einer Zufallszahl (RND);
- einen Schritt (F40) der Nahfeldkommunikation mit einem gesicherten Element (SIM) des mobilen Endgeräts (TRM), um dieses gesicherte Element (SIM) aufzufordern, die Zufallszahl mit einem privaten Schlüssel (PVKM) des mobilen Endgeräts zu signieren, der in diesem gesicherten Element gespeichert ist;
- einen Schritt (F50) des Authentifizierens des mobilen Endgeräts (TRM) anhand der signierten Zufallszahl (RND*) und des öffentlichen Schlüssels (PBKM).

2. Modul (MAM) zur Authentifizierung eines mobilen Endgeräts, das ein elektronisches Ticket (TIC) enthält, wobei das Modul beinhaltet:
- ein Modul (MCC) für den Nahfeldempfang des Tickets (TIC) vom mobilen Endgerät;
- ein Modul (MOK) zum Extrahieren eines öffentlichen Schlüssels (PBKM) des mobilen Endgeräts, der in dem Ticket enthalten ist;
- ein Modul (MGA) zum Erzeugen einer Zufallszahl (RND);
- ein Modul (MCC) zur Nahfeldkommunikation mit einem gesicherten Element (SIM) des mobilen Endgeräts (TRM), um dieses gesicherte Element (SIM) aufzufordern, die Zufallszahl mit einem privaten Schlüssel (PVKM) des mobilen Endgeräts zu signieren, der in diesem gesicherten Element gespeichert ist;
- ein Modul (MA) zum Authentifizieren des mobilen Endgeräts (TRM) anhand der signierten Zufallszahl (RND*) und des öffentlichen Schlüssels (PBKM).

3. Verfahren zur Bereitstellung eines Dienstes für einen Nutzer eines mobilen Endgeräts (TRM), wobei das Verfahren beinhaltet:
- einen Schritt des Erzeugens eines elektronischen Tickets (TIC), wobei das Ticket von dem mobilen Endgerät aus verwendbar ist, um auf den Dienst zuzugreifen, umfassend:
∘ einen Schritt (E10) des Erhaltens des öffentlichen Schlüssels (PBKM) des mobilen Endgeräts, der komplementär zu einem privaten Schlüssel (PVKM) des mobilen Endgeräts ist, der in einem gesicherten Element (SIM) des mobilen Endgeräts gespeichert ist;
∘ einen Schritt (E20) des Erzeugens eines elektronischen Tickets (TIC), wobei das Ticket Felder (CTE) beinhaltet, die mindestens umfassen:
▪ Identifikationsdaten des Dienstes (DIS); und
▪ den öffentlichen Schlüssel des mobilen Endgeräts (PBKM);
- einen Schritt (K10) der Ticketlieferung, der geeignet ist, das Ticket (TIC) direkt oder über eine dritte Vorrichtung an eine Anwendung (APP) des mobilen Endgeräts zu liefern, die außerhalb des gesicherten Elements (SIM) ausgeführt wird;
- einen Authentifizierungsschritt, umfassend:
∘ einen Schritt (F10) des Empfangens des Tickets (TIC) vom mobilen Endgerät über Nahfeldkommunikationseinrichtungen (MCC);
∘ einen Schritt (F20) des Extrahierens eines öffentlichen Schlüssels (PBKM) des mobilen Endgeräts, der in dem Ticket enthalten ist;
∘ einen Schritt (F30) des Erzeugens einer Zufallszahl (RND);
∘ einen Schritt (F40) der Nahfeldkommunikation mit einem gesicherten Element (SIM) des mobilen Endgeräts (TRM), um dieses gesicherte Element (SIM) aufzufordern, die Zufallszahl mit einem privaten Schlüssel (PVKM) des mobilen Endgeräts zu signieren, der in diesem gesicherten Element gespeichert ist;
∘ einen Schritt (F50) des Authentifizierens des mobilen Endgeräts (TRM) anhand der signierten Zufallszahl (RND*) und des öffentlichen Schlüssels (PBKM);
- einen Schritt (K30) zum Kontrollieren des Zugriffs auf den Dienst, der geeignet ist, die Identifikationsdaten des Dienstes zu validieren und den Dienst nur bereitzustellen, wenn die Identifikationsdaten des Dienstes und die Authentizität des mobilen Endgeräts verifiziert worden sind.

4. System (SYS) zur Bereitstellung eines Dienstes für einen Nutzer eines mobilen Endgeräts, wobei dieses System beinhaltet:
- eine Entität (EGT) zum Erzeugen eines elektronischen Tickets (TIC), beinhaltend:
- ein Modul (MOK) zum Erhalten des öffentlichen Schlüssels (PBKM) des mobilen Endgeräts, der komplementär zu einem privaten Schlüssel (PVKM) des mobilen Endgeräts ist, der in einem gesicherten Element (SIM) des mobilen Endgeräts gespeichert ist;
- ein Modul (MGT) zum Erzeugen eines elektronischen Tickets, wobei das Ticket Felder (CTE) beinhaltet, die mindestens umfassen:
∘ Identifikationsdaten des Dienstes (DIS); und
∘ den öffentlichen Schlüssel des mobilen Endgeräts (PBKM),
wobei das Ticket vom mobilen Endgerät aus verwendbar ist, um auf den Dienst zuzugreifen;
- ein Ticketliefermodul (COM), das geeignet ist, das Ticket (TIC) direkt oder über eine dritte Vorrichtung an eine Anwendung (APP) des mobilen Endgeräts zu liefern, die außerhalb des gesicherten Elements (SIM) ausgeführt wird;
- ein Modul zur Authentifizierung des mobilen Endgeräts (MAM) nach Anspruch 2; und
- ein Modul zum Kontrollieren des Zugriffs auf den Dienst (MCA), das geeignet ist, die Identifikationsdaten des Dienstes zu validieren und den Dienst nur bereitzustellen, wenn die Identifikationsdaten des Dienstes und die Authentizität des mobilen Endgeräts verifiziert worden sind.

5. System nach Anspruch 4 **dadurch gekennzeichnet, dass** es beinhaltet:
- ein Modul zur Verifizierung des Tickets (MVT), das geeignet ist, die Integrität des elektronischen Tickets anhand der im Ticket enthaltenen Signatur und eines öffentlichen Schlüssels (PBKG) zu verifizieren, der komplementär zu dem privaten Schlüssel (PVKG) ist, der von der Ticketerzeugungsentität zum Berechnen der Signatur verwendet wurde;
- wobei das Modul zum Kontrollieren des Zugriffs auf den Dienst (MCA) geeignet ist, die Identifikationsdaten des Dienstes zu validieren und den Dienst nur bereitzustellen, wenn die Identifikationsdaten des Dienstes und die Authentizität des mobilen Endgeräts verifiziert worden sind.

6. System nach Anspruch 4 oder 5, **dadurch gekennzeichnet, dass**:
- die Felder des elektronischen Tickets, die für das Angebot repräsentativ sind, ferner eine Schlüsselkennung (IDKM) beinhalten, die das aus dem öffentlichen Schlüssel (PBKM) des mobilen Endgeräts und dem im gesicherten Element (SIM) des mobilen Endgeräts gespeicherten privaten Schlüssel (PVKM) des mobilen Endgeräts gebildete Paar eindeutig identifiziert;
- das Modul zur Authentifizierung des mobilen Endgeräts (MAM) geeignet ist, die Schlüsselkennung (IDKM) zu erhalten, um das mobile Endgerät zu authentifizieren.

7. System nach einem der Ansprüche 4 bis 6, **dadurch gekennzeichnet, dass**:
- die Felder des elektronischen Tickets, die für das Angebot repräsentativ sind, ferner eine Referenz (RAS) des Algorithmus beinhalten, die zum Berechnen der Signatur verwendet wird;
- das Modul zur Authentifizierung des Tickets (MVT) geeignet ist, die Referenz (RAS) zu erhalten, um das mobile Endgerät zu authentifizieren.

8. System nach einem der Ansprüche 4 bis 7, **dadurch gekennzeichnet, dass** die Identifikationsdaten des Dienstes (DIS) eine Gültigkeitsdauer des Diensteangebots beinhalten.

9. System nach einem der Ansprüche 4 bis 8, **dadurch gekennzeichnet, dass** die Identifikationsdaten des Dienstes (DIS) eine Kennung des Diensteanbieters beinhalten.

10. System nach einem der Ansprüche 4 bis 9, **dadurch gekennzeichnet, dass** es eine Vertrauensentität (TRST) beinhaltet, die geeignet ist, der Entität (EGT) zur Ticketerzeugung den öffentlichen Schlüssel (PBKM) des mobilen Endgeräts bereitzustellen.

11. System nach einem der Ansprüche 4 bis 10, **dadurch gekennzeichnet, dass** das Ticketliefermodul (COM) geeignet ist, das Ticket (TIC) an das mobile Endgerät (TRM) per SMS, MMS, E-Mail oder HTTP-Download durch das mobile Endgerät zu liefern.

12. System nach einem der Ansprüche 4 bis 11, **dadurch gekennzeichnet, dass** das an das mobile Endgerät gelieferte Ticket (TIC) nicht verschlüsselt ist.

13. System nach einem der Ansprüche 4 bis 12, **dadurch gekennzeichnet, dass** das Modul zur Authentifizierung des mobilen Endgeräts (MAM) mit dem gesicherten Element des Endgeräts über Nahfeldkommunikationseinrichtungen kommuniziert.

14. Zugangsportal, das in einem System nach einem der Ansprüche 4 bis 13 verwendet werden kann, **dadurch gekennzeichnet, dass** es ein Modul zur Authentifizierung eines mobilen Endgeräts nach Anspruch 2 beinhaltet.

## Claims

1. Method for authenticating a mobile terminal bearing an electronic ticket (TIC), said method including:
- a step (F10) of receiving said ticket (TIC) from the mobile terminal by short-range communication means (MCC);
- a step (F20) of extracting a public key (PBKM) of the mobile terminal that is included in said ticket;
- a step (F30) of generating a random (RND);
- a step (F40) of short-range communication with a secure element (SIM) of the mobile terminal (TRM) in order to ask this secure element (SIM) to sign said random with a private key (PVKM) of the mobile terminal that is stored in this secure element;
- a step (F50) of authenticating said mobile terminal (TRM) on the basis of said signed random (RND*) and of said public key (PBKM).

2. Module (MAM) for authenticating a mobile terminal bearing an electronic ticket (TIC), said module including:
- a module (MCC) for short-range reception of said ticket (TIC) from the mobile terminal;
- a module (MOK) for extracting a public key (PBKM) of the mobile terminal that is included in said ticket;
- a module (MGA) for generating a random (RND);
- a module (MCC) for short-range communication with a secure element (SIM) of the mobile terminal (TRM) in order to ask this secure element (SIM) to sign said random with a private key (PVKM) of the mobile terminal that is stored in this secure element;
- a module (MA) for authenticating said mobile terminal (TRM) on the basis of said signed random (RND*) and of said public key (PBKM).

3. Method for providing a service to a user of a mobile terminal (TRM), the method including:
- a step of generating an electronic ticket (TIC), said ticket being able to be used from said mobile terminal to access the service, comprising:
∘ a step (E10) of obtaining the public key (PBKM) of the mobile terminal, which is complementary to a private key (PVKM) of the mobile terminal that is stored in a secure element (SIM) of the mobile terminal;
∘ a step (E20) of generating an electronic ticket (TIC), said ticket including fields (CTE) comprising at least:
▪ identification data (DIS) for said service; and
▪ said public key (PBKM) of the mobile terminal;
- a ticket delivery step (K10), which is able to deliver said ticket (TIC), directly or via a third-party device, to an application (APP) of the mobile terminal that runs outside of the secure element (SIM);
- an authentication step comprising:
∘ a step (F10) of receiving said ticket (TIC) from the mobile terminal by short-range communication means (MCC);
∘ a step (F20) of extracting a public key (PBKM) of the mobile terminal that is included in said ticket;
∘ a step (F30) of generating a random (RND);
∘ a step (F40) of short-range communication with a secure element (SIM) of the mobile terminal (TRM) in order to ask this secure element (SIM) to sign said random with a private key (PVKM) of the mobile terminal that is stored in this secure element;
∘ a step (F50) of authenticating said mobile terminal (TRM) on the basis of said signed random (RND*) and of said public key (PBKM);
- a step (K30) of controlling access to said service, which is able to validate the identification data for said service and to provide said service only if the identification data for the service and the authenticity of the mobile terminal have been verified.

4. System (SYS) for providing a service to the user of a mobile terminal, this system including:
- an entity (EGT) for generating an electronic ticket (TIC), including:
- a module (MOK) for obtaining the public key (PBKM) of the mobile terminal, which is complementary to a private key (PVKM) of the mobile terminal that is stored in a secure element (SIM) of the mobile terminal;
- a module (MGT) for generating an electronic ticket, said ticket including fields (CTE) comprising at least:
∘ identification data (DIS) for said service; and
∘ said public key (PBKM) of the mobile terminal,
said ticket being able to be used from the mobile terminal to access the service;
- a ticket delivery module (COM), which is able to deliver said ticket (TIC), directly or via a third-party device, to an application (APP) of the mobile terminal that runs outside of the secure element (SIM);
- a module (MAM) for authenticating the mobile terminal according to Claim 2; and
- a module (MCA) for controlling access to said service, which is able to validate the identification data for said service and to provide said service only if the identification data for the service and the authenticity of the mobile terminal have been verified.

5. System according to Claim 4, **characterized in that** it includes:
- a module (MVT) for checking said ticket, which is able to check the integrity of said electronic ticket on the basis of said signature included in the ticket and of a public key (PBKG), which is complementary to the private key (PVKG) used by said ticket generating entity to compute said signature;
- said module (MCA) for controlling access to said service being able to validate the identification data for said service and to provide said service only if the identification data for the service, the integrity of the electronic ticket and the authenticity of the mobile terminal have been verified.

6. System according to Claim 4 or 5, **characterized in that**:
- the fields of the electronic ticket that are representative of the offering further include a key identifier (IDKM), which uniquely identifies the pair consisting of the public key (PBKM) of the mobile terminal and the private key (PVKM) of the mobile terminal that is stored in the secure element (SIM) of the mobile terminal;
- said module (MAM) for authenticating the mobile terminal being able to obtain said key identifier (IDKM) in order to authenticate said mobile terminal.

7. System according to any one of Claims 4 to 6, **characterized in that**:
- the fields of the electronic ticket that are representative of the offering further include a reference (RAS) of the algorithm used to compute said signature;
- said module (MVT) for authenticating said ticket being able to obtain said reference (RAS) in order to authenticate said mobile terminal.

8. System according to any one of Claims 4 to 7, **characterized in that** the identification data (DIS) for said service include a period of validity of the service offering.

9. System according to any one of Claims 4 to 8, **characterized in that** the identification data (DIS) for said service include an identifier of the service provider.

10. System according to any one of Claims 4 to 9, **characterized in that** it includes a trusted entity (TRST) that is able to provide the public key (PBKM) of the mobile terminal to said ticket generating entity (EGT).

11. System according to any one of Claims 4 to 10, **characterized in that** said ticket delivery module (COM) is able to deliver said ticket (TIC) to the mobile terminal (TRM) by SMS, MMS, email or an HTTP download by the mobile terminal.

12. System according to any one of Claims 4 to 11, **characterized in that** the ticket (TIC) delivered to the mobile terminal is not encrypted.

13. System according to any one of Claims 4 to 12, **characterized in that** the module (MAM) for authenticating the mobile terminal communicates with said secure element of the terminal by near-field communication means.

14. Access gate that can be used in a system according to any one of Claims 4 to 13, **characterized in that** it includes a module for authenticating the mobile terminal in accordance with Claim 2.
